# EUROPÄISCHE PATENTSCHRIFT

(11) **EP 0 765 260 B1**
(45) Veröffentlichungstag und Bekanntmachung des Hinweises auf die Patenterteilung: **10.03.1999**
(21) Anmeldenummer: 95924880.8
(22) Anmeldetag: 20.06.1995
(51) Int. Cl.: B60T 8/36, F16K 27/00

(54) **DRUCKREGELVORRICHTUNG**
PRESSURE CONTROL DEVICE
DISPOSITIF DE REGULATION DE LA PRESSION

(30) Priorität: 28.06.1994 DE 4422491
(43) Veröffentlichungstag der Anmeldung: 02.04.1997
(73) Patentinhaber: Continental Teves AG & Co. oHG, 60488 Frankfurt (DE)
(72) Erfinder: VOLZ, Peter, D-64291 Darmstadt (DE)
(86) Internationale Anmeldenummer: EP9502377
(87) Internationale Veröffentlichungsnummer: WO9600670

(56) Entgegenhaltungen:
- EP-A- 0 499 670
- EP-A- 0 539 770
- WO-A-91/10583
- WO-A-92/08630
- WO-A-92/12878
- WO-A-94/03352
- WO-A-95/03961
- DE-A- 4 232 205

## Beschreibung

Die Erfindung betrifft eine Druckregelvorrichtung, insbesondere Bremsdruckregelvorrichtung nach dem Oberbegriff des Anspruchs 1.

Eine elektrohydraulische Druckregelvorrichtung der gattungsbildenden Art wird beispielhaft in der internationalen Veröffentlichung WO 92/12878 beschrieben, wonach über die bereits hinreichend bekannte Blockbauweise des Ventilaufnahmekörpers hinaus der Deckel mittels eines plattenförmigen Trägerelementes unterteilt ist, um einerseits einen elektronischen Regler oder Teile für einen elektronischen Regler aufzunehmen, andererseits die elektrische Verbindung zwischen dem elektronischen Regler und den an den Elektromagnetventilen überstehenden Kontaktelementen herzustellen. Der Deckel ist mit den Spulen der Elektromagnetventile auf die Ventildome des Ventilaufnahmekörpers aufgesteckt, wobei zur Herstellung des elektrischen Anschlusses zwischen den Kontaktelementen und den im Deckel integrierten elektronischen bzw. elektrischen Komponenten Steckkontakte ineinander greifen. Zur Befestigung der Spulen am Trägerelement wird vorgeschlagen, elastische Halterungen, beispielsweise Federn zu verwenden oder die Spulen in einem elastischen Formkörper einzubetten. Die funktionsgerechte Anordnung der Spulen unter Berücksichtigung der Einbauverhältnisse gestaltet sich hierbei als Komplex.

In der gattungsbildenden Druckschrift WO,A,92/08630 ist zur elektromagnetischen Betätigung eines Hydraulikventils der Jochring als einteiliges Hülsenteil mit dem Rohrkörper einer Ventilspule verbunden. Die Ventilspule erstreckt sich mit ihren Kontaktstiften durch eine als Trägerelement ausgeführte Zwischenwand eines deckelförmigen Gehäuses bis zu einer Leiterfolie, die auf einer Aluminiumplatte aufgelegt ist. Die Fixierung jeder Ventilspule am Trägerelement geschieht über elastische Dichtstopfen, die die Kontaktstifte umgreifen und sich bis in den Öffnungsbereich der auf dem Trägerelement aufliegenden Aluminiumplatte erstrecken.Die beim Betrieb der Ventilspule entstehende Wärme kann allenfalls über den Rohrkörper auf den Ventilaufnahmekörper übertragen werden. Die Aluminiumplatte kann ausschließlich für unmittelbar an ihr angebrachte elektriche Bauelemente als Wärmesenke wirken. Die elastischen Dichtstopfen an den Rohrkörpern der Hydraulikventile wirken als Wärmeisolatoren für die Ventilspulen und die Güte des Magnetkreises hängt im wesentlichen von der Paßgenauigkeit des Hülsenteils mit dem Rohrkörper am Ventildom ab.

Es ist die Aufgabe der Erfindung, die aus dem genannten Stand der Technik bekannte Druckregelvorrichtung zu verbessern, um eine einfache Spulenpositionierung, eine kompakte sowie funktionsoptimierte Anordnung der Spulen gegenüber dem Trägerelement zu schaffen, die möglichst einfach herzustellen und zu prüfen ist, wobei die Betriebstemperaturen und Wärmedehnungen der Bauteile möglichst gut vom Trägerelement aufgenommen werden sollen und wobei auch der Magnetkreis der Spulen möglichst optimal gestaltet sein soll.

Die gestellte Aufgabe wird erfindungsgemäß durch die kennzeichnenden Merkmale des Patentanspruchs 1 gelöst.

Eine besonders einfache Aufnahme der Spule in der Hülse ergibt sich gemäß den Merkmalen des Anspruchs 2 , wenn die Hülse zu einem die Spule ummantelnden Rohrkörper ausgeformt ist, wodurch sich ein überbrückungsfreier, geschlossener Magnetkreis zwischen dem Ventildom und dem Ventilaufnahmekörper ergibt.

Die Ausgestaltung der Erfindung gemäß Anspruch 3 sieht vor, den Ringkörper als ein separat von der Hülse am Trägerelement anlegbares Ringteil auszuführen, so daß der Magnetkreis über das Trägerelement geschlossen wird. Hierdurch ergibt sich die Möglichkeit, sowohl den Ringkörper wie auch die Hülse nach Belieben auszurichten bzw. zu befestigen.

Dies geschieht insbesondere unter Bezug auf den im Anspruch 4 niedergelegten Gedanken mittels einer kraft- und/oder formschlüssigen Befestigung des Rohrkörpers am Trägerelement, während die Hülse zum Zwecke einer einfachen Zentrierung gegenüber dem Ventildom separat vom Rohrkörper ausgerichtet werden kann.

Gemäß Anspruch 5 eignet sich hierzu eine Topfform für die Hülse, dessen offenes Ende über den Ventildom gestülpt ist, so daß die Hülse nicht durch aufwendige Maßnahmen ausgerichtet werden braucht und überdies durch ihre Gestalt den Magnetfluß zum Trägerelement verbessert.

Da durch die Merkmale des Anspruchs 6 zur radialen Verlagerbarkeit der Hülse gegenüber der Spule kein Spiel zwischen dem Ventildom und der Hülse notwendig ist, ergibt sich ein nahezu verlustfreier Magnetkreis.

Nach Anspruch 7 ist vorgesehen, auf der Oberseite des Trägerelementes eine Wärmeleitfolie anzuordnen, auf der elektrische bzw. elektronische Bauteile angebracht sind, um durch einen verbesserten Wärmeübergang auf das Trägerelement die Betriebstemperatur der Bauteile zu senken.

Weitere Merkmale, Vorteile und Anwendungsmöglichkeiten gehen aus der folgenden Darstellung mehrerer Ausführungsbeispiele hervor.

Es zeigen:
- Figur 1: eine Teilansicht im Längsschnitt durch die erfindungsgemäße Druckregelvorrichtung,
- Figur 2: eine alternative Anordnung der Hülse in konstruktiver Abwandlung der Druckregelvorrichtung von Figur 1,
- Figur 3: eine weitere Ausführungsform der Hülse zur vereinfachten Befestigung und Verbesserung des Magnetflusses innerhalb der Druckregelvorrichtung,
- Figur 4: eine weitere Ausgestaltung des Gehäuses der Druckregelvorrichtung mit einer veränderten Gestaltung der Hülse.

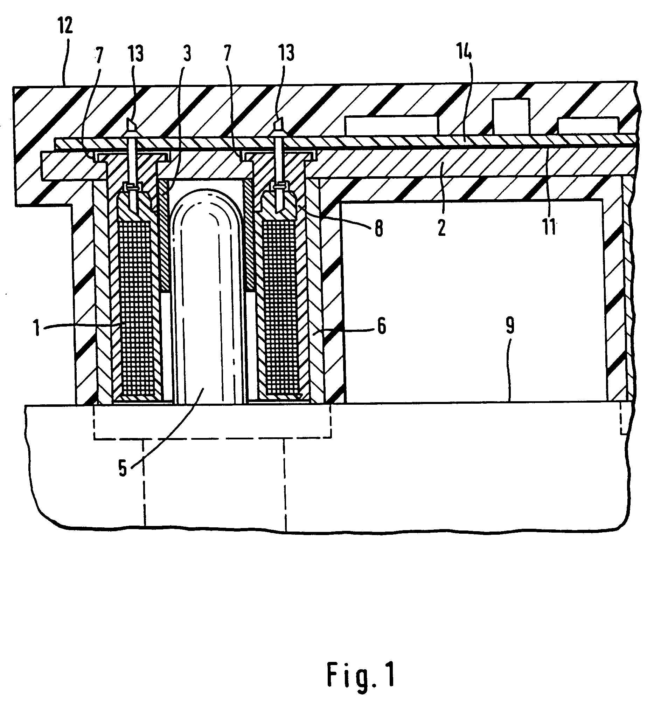

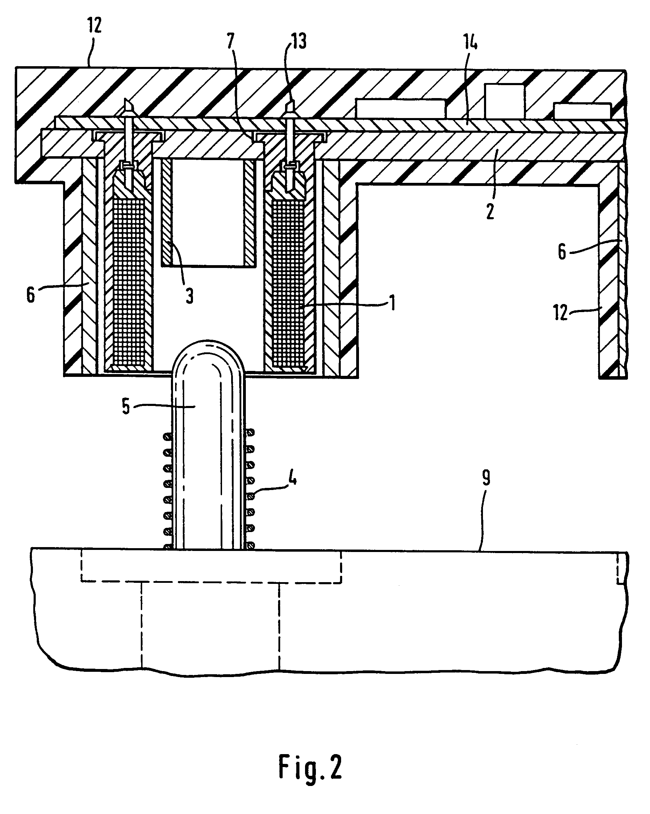

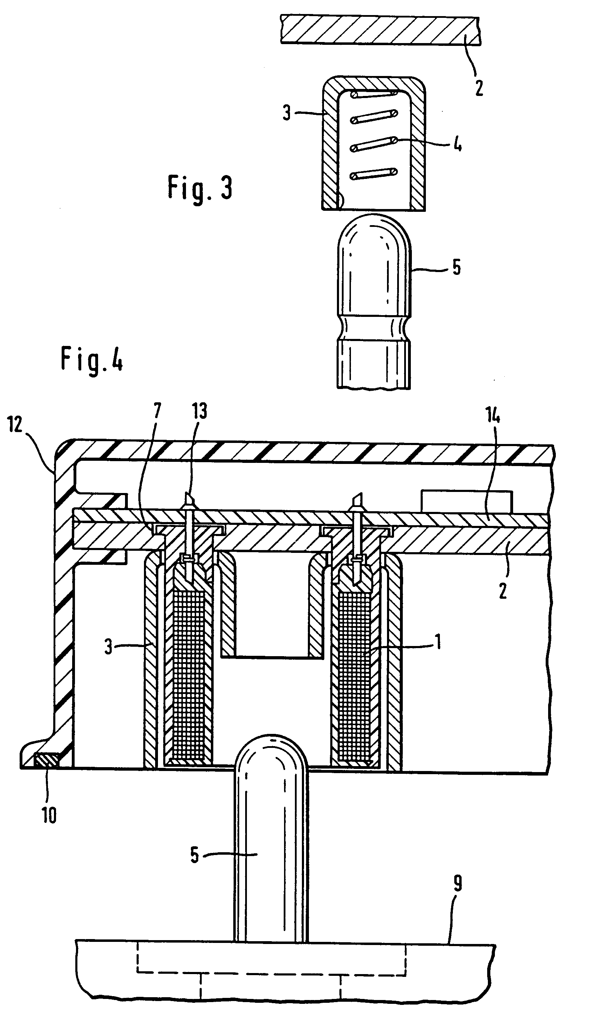

Die Figur 1 zeigt eine Seitenansicht der erfindungsgemäßen Druckregelvorrichtung mit einer Skizzierung der Grundkomponenten. Der dargestellte linke Abschnitt der Druckregelvorrichtung besteht aus einem im Profilschnitt gezeigten Gehäuse 12, das ein eine Leiterbahn 14 aufweisendes Trägerelement 2 umschließt. Unterhalb des Trägerelementes 2 beinhaltet das Gehäuse 12 in der Abbildung eine von mehreren Spulen 1 der vorzugsweise in einer oder mehreren Reihen vom Gehäuse 12 gehaltenen Elektromagnetventile. Das Gehäuse 12 besteht aus einer Kunststoffspritzmasse, das zur Aufnahme und Abdichtung der elektrischen bzw. elektronischen Einzelbauteile der Druckregelvorrichtung dient. Zur Aufnahme der an den Spulen 1 hervorstehenden Kontaktelemente 13 ist das Trägerelement 2 mit mehreren Durchgangsbohrungen 7 versehen, die von einer Vergußmasse ausgefüllt sind. Das Trägerelement 2 ist als im wesentlichen horizontal über den Spulen 1 aufgesetzte Stahlplatte ausgeführt, die mehrere auf ihrer Unterseite angeordnete Rohrkörper 6 und Hülsen 3 aufweist. Die jeweils mit einem Isolierstoff ummantelten Spulen 1 befinden sich auf einem Spulenwickelkörper 8, der gleichfalls aus einem Kunststoff besteht. Alternativ kann die Spule 1 durch ein Sinterverfahren hergestellt werden, wodurch sich die Notwendigkeit eines Spulenwickelkörpers 8 als Spulengrundkörper erübrigt. Die Rohrkörper 6 und die Hülsen 3 sind aus Stahl gefertigt und an der Unterseite des Trägerelementes 2 angeschweißt. Der blockförmige Ventilaufnahmekörper 9 ist aus Leichtmetall gefertigt, aus dem mehrere Ventildome 5, die Bestandteil von Ventilpatronen der Hydraulikventile sind, hervorstehen. Die Ventilpatrone und der Ventildom 5 ist gleichfalls aus Stahl gefertigt, so daß bei Erregung der Spule 1 der Magnetkreis über die vorgenannten Stahlteile geschlossen ist. Auf den (explizit nicht dargestellt), in parallelen Reihen angeordneten Ventildomen 5 sind die am Trägerelement 2 zwischen den Hülsen 3 und den Rohrkörpern 6 angeordneten Spulen 1 fixiert. Das Trägerelement 2 übernimmt sowohl die Funktion einer den Magnetfluß schließenden Rückschlußplatte, wie auch die Funktion einer Wärmesenke, insbesondere für die oberhalb der Trägerplatte angeordneten elektrischen Bauteile, die in Form einer mit Elektronikteilen bestückten Leiterbahn 14 gezeigt sind. Zur Verbesserung des Wärmeflusses befindet sich zwischen der Leiterbahn 14 und dem Trägerelement 2 eine adhäsive Wärmeleitfolie 11. Die gesamte Baugruppe ist vorteilhaft in einem Guß mit dem Kunststoff des Gehäuses 12 umspritzt, so daß eine korrosionsbeständige, bauraum- und magnetflußoptimierte elektrische Einheit geschaffen ist, die auf die im Ventilaufnahmekörper 9 befindliche Hydraulik- oder Pneumatikeinheit (Hydraulik- bzw. Pneumatikventile) automatengerecht aufgesetzt werden kann.

Die Figur 2 zeigt abweichend von Figur 1 die mit einer Druckfeder 4 belastete Hülse 3. Die Hülse 3 weist gegenüber der Spule 1 einen großzügig dimensionierten radialen Luftspalt auf, der unabhängig von Bauteiltoleranzen und Ausrichtfehlern das Aufsetzen der Spule 1 auf den Ventildom 5 ermöglicht. Vertikale Bauteiltoleranzen werden zwangsläufig durch die Wirkung der Druckfeder 4 überbrückt, die durch ihre Wirkung auf die Hülse 3 für einen einwandfreien Kontakt zwischen der Hülse 3 und dem Trägerelement 2 sorgt, wobei bei großzügig wählbaren radialen Bauteiltoleranzen jederzeit durch die enge Passung der Hülse 3 auf dem Ventildom 5 der Kontaktschluß gegeben ist. Somit ist durch die erfindungsgemäße Anordnung einer federvorgespannten Hülse 3 am Ventildom 5 trotz relativ großem Radialspiel zwischen Hülse 3 und Spule 1 jederzeit der Magnetkreis zwischen dem Ventilaufnahmekörper 9, dem Rohrkörper 6, dem Trägerelement 2, der Hülse 3 über den Ventildom 5 zum nicht explizit dargestellten Magnetkern innerhalb des Ventildoms 5 geschlossen. Die magnetischen Verluste sind somit durch die erfindungsgemäße Anordnung der Einzelteile vernachlässigbar gering. Der Rohrkörper 6 ist gleichfalls - wie in Figur 1 beschrieben - mit dem Trägerelement vorzugsweise verschweißt, während durch die Wirkung der Druckfeder 4 auf das Trägerelement 2 eine schwimmende Lagerung zur Ausrichtung der Hülse 3 erfolgt. Zur Befestigung des Rohrkörpers 6 am Trägerelement 2 eignen sich nicht nur Schweiß- sondern auch Löt- und Klemmverfahren. Ferner ist es denkbar, daß der Rohrkörper zunächst lose auf das Trägerelement 2 aufgelegt wird, und anschließend im Rahmen des Umspritzens der gesamten Elektronikeinheit mit Kunststoff seine Fixierung am Trägerelement 2 erhält. Da der Rohrkörper 6, wie auch die Hülse 3 gleichfalls aus Stahl hergestellt sind und das Trägerelement 2 unmittelbar kontaktieren, ist eine einwandfreier Wärmeübergang von der Spule 1 auf das aus Stahl bestehende Trägerelement 2 gegeben, wodurch sich bei Bedarf die Einschaltzeiten der Spule 1 ohne Gefahr einer Überhitzung erhöhen lassen. Soweit nicht auf die bereits in Figur 1 beschriebenen weiteren Einzelheiten explizit eingegangen wurde, ist von einem weitgehend identischen Aufbau der Druckregelvorrichtung nach Figur 2 im Hinblick auf die Erläuterungen zu Figur 1 auszugehen.

In Figur 3 ist abweichend zur Druckregelvorrichtung nach Figur 1 bzw. Figur 2 die Hülse 3 als topfförmiges Gebilde dargestellt, das mit seinem Topfboden das Trägerelement 2 kontaktiert, während der Rand des Topfes nach dem Aufsetzen auf den Ventildom 5 diesen abschnittsweise umschließt. Damit ergibt sich eine einfache Fixierung der Hülse 3 am Ventildom 5, die durch das Anbringen von clipsförmigen Elementen am Topfrand oder am Ventildom günstig beeinflußt wird. Die überdies am Trägerelement 2 anliegende große Kontaktfläche des Topfbodens verbessert den magnetischen Fluß, wobei auch das zwischen dem Ventildom 5 und der Hülse 3 bestehende Minimalspiel (Luftspalt) die magnetischen Verluste gering hält. Damit wird bei kleinstem erforderlichem Bauraum und Montageaufwand ein optimaler magnetischer Fluß realisiert. Dies ermöglicht bei Bedarf den nunmehr für die Spule 1 zur Verfügung stehende größere Bauraum besser auszunutzen, um die Spule 1 zu optimieren. Die relativ große Auflagefläche des Topfbodens am Trägerelement 2 trägt ferner zu einem besseren Wäremübergang zwischen Elektromagnetventil und Trägerelement 2 bei. Figur 3 zeigt lediglich die erfindungsgemäßen Varianten zu Figur 1 und Figur 2, so daß bezüglich den weiteren notwendigen Einzelheiten der Druckregelvorrichtung auf die Zeichnungen- und Beschreibungsteile von Figur 1 und 2 verwiesen wird.

Die Figur 4 zeigt abweichend von den vorangegangenen Ausführungsvarianten ein zu einem Spulenmantelgehäuse ausgeformte Hülse 3, die sich als dünner, kappenförmiger Jochring schwimmend über der Spule 1 von innen nach außen erstreckt. Der Luftspalt zwischen der Spule 1 und dem weitgehend geschlossenen Hülse 3 ist derart bemessen, daß die infolge von Bauteiltoleranzen notwendigen Abstände bei der Montage der Elektronikeinheit (Gehäuse 12) auf der Hydraulik- bzw. Pneumatikeinheit (Ventilaufnahmekörper 9) ausgeglichen werden können. Die Hülse 3 kann sich somit wie auch in den vorangegangenen Ausführungsbeispiele erläutert, auf dem Ventildom 5 zentrieren, ohne durch den evtl. erforderlichen Radialversatz eine Verspannung oder Beschädigung der Spule 1 und der Kontaktelemente 13 hervorzurufen. Jedes Kontaktelement 13 der Spule 1 ist vorzugsweise in der großdimensionierten Durchgangsbohrung 7 des Trägerelementes 2 mit einer Kunststoffmasse vergossen, so daß ein Eindringen von Feuchtigkeit in den Raum der Spule 1 verhindert ist. Das Gehäuse 12 der Druckregelvorrichtung ist vorzugsweise aus einem rahmenförmigen Kunststofformteil hergestellt, das mittels einer Dichtung 10 auf den Ventilaufnahmekörper 9 aufgesetzt ist und im Bereich der die elektrischen Bauteile aufnehmenden Leiterbahn 14 einen Deckelhohlraum bildet, der bei Bedarf mit einer korrosionsbeständigen Masse ausgegossen ist. Bei Bedarf ist gleichfalls wie in Figur 1 beschrieben, zwischen dem Trägerelement 2 und der Leiterbahn 14 eine Wärmeleitfolie angeordnet. Durch die weitgehend geschlossene Form der Hülse 3, ermöglicht die Hülse 3 in der Funktion einer den Magnetkreis schließenden Spulenkappe einen unterbrechungsfreien Magnetfluß und eine große wärmeübertragende Fläche zwischen dem Trägerelement 2 und der Spule 1.

Durch die voranbeschriebenen Ausführungsformen der Erfindung lassen sich folgende Vorteile erzielen:
1. Einsparung teuerer und bauraumvergrößernder Trägerelemente,
2. beste Raumausnutzung zwischen jeweils den Ventildomen und der Elektronik,
3. optimaler magnetischer Fluß zwischen den notwendigen Bauteilen der Elektromagnetventile infolge von zusätzlich gewonnenem Bauraum,
4. der zusätzlich gewonnene Bauraum ermöglicht eine optimale Gestaltung der Spule,
5. Minimalspiele zwischen Spule 1 und Hülse 3 führen zu kleinsten Luftspaltverlusten, d.h. Magnetflußverlusten unter Berücksichtigung von Montagespielen für den Toleranzausgleich,
6. höchste Korrosionsbeständigkeit durch Vollumspritzung bzw. weitgehende Kapselung der Elektronikeinheit auf der Hydraulik- bzw. Pneumatikeinheit, Gewichts- und Kostenreduzierung durch kleinere Baugruppen.

### Bezugszeichenliste

- 1: Spule
- 2: Trägerelement
- 3: Hülse
- 4: Druckfeder
- 5: Ventildom
- 6: Rohrkörper
- 7: Durchgangsbohrung
- 8: Spulenwickelkörper
- 9: Ventilaufnahmekörper
- 10: Dichtung
- 11: Wärmeleitfolie
- 12: Gehäuse
- 13: Kontaktelement
- 14: Leiterbahn

## Patentansprüche

1. Druckregelvorrichtung, insbesondere Bremsdruckregelvorrichtung, wie Antiblockierregelvorrichtung, Antriebsschlupfregelvorrichtung, mit elektromagnetisch betätigbaren Hydraulik- und/oder Pneumatikventilen , die an einem Ventilaufnahmekörper (9) angeordnet sind, mit Spulen (1), die an ihren den Ventilaufnahmekörper (9) überragenen Teilen mit elektrischen Kontaktelementen (13) versehen sind, mit einer Abdeckungseinheit, die die Spulen (1) und die Kontaktelemente (13) abdeckt, mit einem Trägerelement (2),an dem die Spulen(1) befestigt sind, das innerhalb der Abdeckungseinheit angeordnet ist, wobei die Abdeckungseinheit oder ein Teil der Abdeckungseinheit für die Aufnahme eines elektronischen Reglers oder für die Aufnahme von Anschlußteilen für einen elektronischen Regler geeignet ist, wobei das Trägerelement (2) aus einem den Wärmefluß leitenden Material besteht und wobei mehrere den Wärmefluß leitende Teile auf der von den Spulen (1) abgewandten Oberseite des plattenförmigen Trägerelementes (2) angeordnet sind, dadurch **gekennzeichnet**, daß das Trägerelement (2) aus einem den Magnetfluß leitenden Material besteht, wobei mehrere den Magnet- und den Wärmefluß leitenden Hülsen (3) und Rohrkörper (6) jeweils als für den Magnetkreis der Hydraulik- und/oder Pneumatikventile verwendete Teile auf der den Spulen(1) zugewandten Unterseite des Trägerelementes (2) angeordnet sind, die kraft- und/oder formschlüssig am Trägerelement (2) oder an mehreren den Wärmefluß leitenden und die Spulen (1) aufnehmenden Ventildomen (5) gehalten sind, wobei die Ventildome (5) als Bestandteil von Ventilpatronen der Hydraulik- und/oder Pneumatikventilen, die Hülsen (3), die Rohrkörper (6) und das Trägerelement (2) aus Stahl und der die Ventilpatronen aufnehmende Ventilaufnahmekörper (9) aus Leichtmetall hergestellt sind.

2. Druckregelvorrichtung nach Anspruch 1, dadurch **gekennzeichnet**, daß jeweils eine Hülse (3) zu einem jeweils eine Spule (1) ummantelnden Rohrkörper (6) ausgeformt ist.

3. Druckregelvorrichtung nach Anspruch 1, dadurch **gekennzeichnet**, daß separat von jeder Hülse (3) am Trägerelement (2) jeweils ein jede Spule (1) ummantelnder Rohrkörper (6) anliegt.

4. Druckregelvorrichtung nach Anspruch 3, dadurch **gekennzeichnet**, daß jeder Rohrkörper (6) kraft- und/oder formschlüssig am Trägerelement (2) gehalten ist.

5. Druckregelvorrichtung nach Anspruch 1, dadurch **gekennzeichnet**, daß jede Hülse (3) eine Topfform aufweist, deren offenes Ende über den Ventildom (5) gestülpt ist.

6. Druckregelvorrichtung nach Anspruch 1, dadurch **gekennzeichnet**, daß jede Hülse (3) gegenüber jeder Spule (1) radial verlagerbar ist.

7. Druckregelvorrichtung nach Anspruch 1, dadurch **gekennzeichnet**, daß als eines der den Wärmefluß leitenden Teile auf der von den Spulen (1) abgewandten Oberseite des Trägerelementes (2) eine Wärmeleitfolie (11) angeordnet ist, auf der elektrische oder elektronische Bauteile angeordnet sind.

8. Druckregelvorrichtung nach Anspruch 1, dadurch **gekennzeichnet**, daß die Hülsen (3) entlang der den Spulen (1) zugewandten Unterseite des Trägerelementes (2) radial verlagerbar sind.

## Claims

1. Pressure control device, in particular braking pressure control device, such as an anti-lock control system or traction slip control system, including electromagnetically operable hydraulic and/or pneumatic valves which are mounted on a valve accommodating member (9), coils (1) having electric contact elements (13) on their parts that project from the valve accommodating member (9), a cover unit which covers the coils (1) and the contact elements (13), a carrier element (2) on which the coils (1) are mounted and which is arranged within the cover unit, and the cover unit or part of the cover unit being appropriate to accommodate an electronic controller or to accommodate connecting elements for an electronic controller, wherein the carrier element (2) is made of a material conducting the thermal flux, and a plurality of parts conducting the thermal flux are mounted on the top side of the plate-shaped carrier element (2) remote from the coils (1),
**characterized** in that the carrier element (2) is made of a material conducting the magnetic flux, and a plurality of sleeves (3) and tubular members (6) conducting the magnetic flux and the thermal flux, each being parts used for the magnetic circuit of the hydraulic and/or pneumatic valves, are arranged on the bottom side of the carrier element (2) facing the coils (1), the sleeves and tubular members being retained in operative and/or positive engagement on the carrier element (2) or on a plurality of valve domes (5) which conduct the thermal flux and accommodate the coils (1), wherein the valve domes (5) as parts of valve cartridges of the hydraulic and/or pneumatic valves, the sleeves (3), the tubular members (6) and the carrier element (2) are made of steel, and the valve accommodating member (9) which accommodates the valve cartridges is made of light metal.

2. Pressure control device as claimed in claim 1,
**characterized** in that a sleeve (3) is in each case configured as a tubular member (6) which encompasses a coil (1).

3. Pressure control device as claimed in claim 1,
**characterized** in that, separately of each sleeve (3), a tubular member (6) each which encompasses each coil (1) is in abutment on the carrier element (2).

4. Pressure control device as claimed in claim 3,
**characterized** in that each tubular member (6) is retained on the carrier element (2) in operative and/or positive engagement.

5. Pressure control device as claimed in claim 1,
**characterized** in that each sleeve (3) has a bowl shape, and the open bowl end is slipped over the valve dome (5).

6. Pressure control device as claimed in claim 1,
**characterized** in that each sleeve (3) is radially displaceable with respect to each coil (1).

7. Pressure control device as claimed in claim 1,
**characterized** in that, as one of the components which conduct heat flow, a heat conducting foil (11) is mounted on the top side of the carrier element (2) remote from the coils (1), and electric or electronic components are arranged on the heat conducting foil.

8. Pressure control device as claimed in claim 1,
**characterized** in that the sleeves (3) are radially displaceable along the bottom side of the carrier element (2), the bottom side facing the coils (1).

## Revendications

1. Dispositif de régulation de pression, notamment dispositif de régulation de pression de freinage, tel que dispositif de régulation antiblocage, dispositif de régulation du glissement de traction, comprenant des valves hydrauliques et/ou des valves pneumatiques, à actionnement électromagnétique, qui sont disposées sur un corps de logement de valves (9), des bobines (1), qui sont pourvues, sur leurs parties faisant saillie du corps de logement de valves (9), d'éléments de contact électrique (13), une unité de recouvrement, qui recouvre les bobines (1) et les éléments de contact (13), et un élément de support (2) sur lequel les bobines (1) sont fixées et qui est disposé à l'intérieur de l'unité de recouvrement, l'unité de recouvrement ou une partie de l'unité de recouvrement étant apte à recevoir un régulateur électronique ou à recevoir des pièces de connexion prévues pour un régulateur électronique, l'élément de support (2) étant en une matière conduisant le flux de chaleur et plusieurs pièces conduisant le flux de chaleur étant disposées sur la surface supérieure, située à l'opposé des bobines (1), de l'élément de support (2) en forme de plaque, caractérisé en ce que l'élément de support (2) est en une matière conduisant le flux magnétique, plusieurs manchons (3) et corps tubulaires (6), conduisant le flux magnétique et le flux de chaleur, étant disposés chacun, en tant que pièces utilisées pour le circuit magnétique des valves hydrauliques et/ou des valves pneumatiques, sur la face inférieure, tournée vers les bobines (1), de l'élément de support (2), ces manchons et corps tubulaire étant maintenus par application de force et/ou par complémentarité de formes sur l'élément de support (2) ou sur plusieurs dômes de valve (5) conduisant le flux de chaleur et recevant les bobines (1), tandis que les dômes de valve (5) sont réalisés en tant que parties constitutives de cartouches des valves hydrauliques et/ou des valves pneumatiques, les manchons (3), les corps tubulaires (6) et l'élément de support (2) sont en acier et le corps de logement de valves (9) recevant les cartouches de valve est en un métal léger.

2. Dispositif de régulation de pression suivant la revendication 1, caractérisé en ce que, pour chaque manchon (3), un corps tubulaire (6) respectif, enveloppant une bobine (1) associée, est réalisé au formage à partir de ce manchon.

3. Dispositif de régulation de pression suivant la revendication 1, caractérisé en ce que, pour chaque manchon (3), un corps tubulaire (6) respectif, enveloppant la bobine (1) associée, est en appui sur l'élément de support (2), séparément par rapport au manchon.

4. Dispositif de régulation de pression suivant la revendication 3, caractérisé en ce que chaque corps tubulaire (6) est maintenu par application d'une force et/ou par complémentarité de formes sur l'élément de support (2).

5. Dispositif de régulation de pression suivant la revendication 1, caractérisé en ce que chaque manchon (3) a une forme de cuvette dont l'extrémité ouverte est emboîtée pardessus le dôme de valve (5).

6. Dispositif de régulation de pression suivant la revendication 1, caractérisé en ce que chaque manchon (3) est déplaçable radialement par rapport à la bobine (1) associée.

7. Dispositif de régulation de pression suivant la revendication 1, caractérisé en ce que, constituant l'une des pièces conduisant le flux de chaleur, une feuille conduisant la chaleur (11), sur laquelle des composants électriques ou électroniques sont disposés, est disposée sur la face supérieure, située à l'opposé des bobines (1), de l'élément de support (2).

8. Dispositif de régulation de pression suivant la revendication 1, caractérisé en ce que les manchons (3) sont déplaçables radialement sur la face inférieure, tournée vers les bobines (1), de l'élément de support (2).
